# EUROPEAN PATENT APPLICATION

(11) **EP 1 388 730 A2**
(43) Date of publication of application: **11.02.2004**
(21) Application number: 03077375.8
(22) Date of filing: 29.07.2003
(51) Int. Cl.: G01D 5/14

(54) **Method for forming ferromagnetic targets for position sensors**

(30) Priority: 06.08.2002 US 214047
(71) Applicant: Delphi Technologies, Inc., Troy, MI 48007 (US)
(72) Inventor: Schroeder, Thaddeus, Rochester Hills, MI 48309 (US); Chang, Shih-Chia, Bloomfield Hills, MI 48304 (US); Guerra, Jose A., Cd Juarez Chihuahua (MX)
(74) Representative: Denton, Michael John

(57) **Abstract**

A process for forming ferromagnetic targets 8 for position and speed sensors 15. The targets 8 are formed on a conductor-clad substrate 23 by first applying a layer of photoresist material 26 and then patterning and etching the photoresist 26 to form trenches 42 defined by the shape and dimensions of the required targets 8. Ferromagnetic material is formed in the trenches 42 to complete the formation of the targets 8.

## Description

### Technical Field

The present invention relates generally to position sensors, and more specifically to a method for forming ferromagnetic targets for position sensors to provide the required degree of accuracy and resolution of the sensed position, and target apparatus formed thereby.

### Background of the Invention

Position sensors monitor the position or motion of a first mechanical component relative to a second mechanical component, by producing an electrical signal that varies as the relative position of the two components changes. By taking the time derivative of the position, the relative speed of motion can also be determined. Electrical position sensors are an important part of innumerable products, including use in determining the status of various automotive actuations and processes that involve either linear or angular displacement. For example, the position of an adjustable automotive seat can be determined by magnetic sensing devices mounted in the movable seat frame and the fixed guiding rails. The position and the angular velocity of the crankshaft can also be determined by the appropriate placement of magnetic sensing devices.

One prior art position sensor is a contacting position sensor, which requires physical contact between a signal generator and a sensing element to produce the electrical signal. Contacting position sensors typically consist of a potentiometer responsive to the signal generator and controlled by the component position, such that the output electrical signals vary as a function of the component's position. Motion-induced contact wear limits the durability of the contact-type position sensors.

Non-contact magnetic type position sensors determine position by measuring changes in the magnetic field caused by the movement of a ferromagnetic object through a magnetic field. One example of such a magnetic sensor includes a ferromagnetic target wheel attached to and rotated by a rotating object, the speed and/or position of which is to be determined. The target wheel comprises a plurality of ferromagnetic teeth separated by slots. The sensor also includes a stationary biasing magnet (conventionally a permanent magnet) positioned adjacent to the periphery of the target wheel and a magnetic filed sensitive device, such as a magnetoresistor mounted on the stationary magnet. The magnetoresistor is subjected to the magnetic field developed by the stationary magnetic, as modulated by the target wheel teeth. As the wheel rotates the teeth pass adjacent the stationary magnet, which changes the reluctance of the magnetic circuit and in turn varies the magnetic flux density of the magnetic field produced by the stationary magnet. These variations are sensed by the magnetoresistor and manifested as variations in the resistance thereof.

Electronic circuitry responsive to the magnetoresistor produces an analog signal that varies in response to the magnetic field flux density variations. Thus a voltage signal in the form of a DC-biased waveform is produced by the circuitry. The waveform characteristics correspond to the shape and spacing of the teeth. When the signal exceeds a predetermined threshold, a tooth in the wheel has been detected adjacent the magnetoresistor. By appropriately spacing the teeth along the target wheel, the angular position of the rotating shaft can be determined. It is known that the resistance of the magnetoresistor, and thus the position accuracy of such a device, is affected by the temperature, air gap, magnet aging and the positional accuracy of the teeth relative to the rotating shaft.

A Hall effect device can be used in lieu of a magnetoresistor to sense the changing magnetic field and provide an output signal in response thereto. As is known, a Hall effect device is a current-carrying conductor that when placed in a magnetic field, with the magnetic filed flux lines perpendicular to the direction of current flow, generates a voltage across the device that is perpendicular to both the direction of current flow and the magnetic flux lines.

Whether a magnetoresistor or a Hall effect device is utilized to sense the magnetic field and thus the object position, the position sensor must be accurate, in that it must produce an appropriate electrical signal based upon the measured position. An inaccurate position sensor will hinder the proper evaluation and control of the moving component. A position sensor must also be sufficiently precise in its measurement, although the degree of precision required depends upon the specific application. For some applications, only a rough indication of position is necessary. For instance, an indication of whether a valve is substantially opened or closed may be sufficient in some situations. In other applications a more precise indication of the valve position may be required. The position sensor must also be sufficiently durable for the environment in which it is placed. For example, a position sensor used on an automotive valve will experience almost constant movement while the automobile is in operation. The position sensor must be constructed of mechanical and electrical components that allow it to remain sufficiently accurate and precise during its projected lifetime, despite considerable mechanical vibrations and thermal extremes and gradients.

The ferromagnetic targets discussed above are typically large and heavy structures, e.g., gears and slotted disks, manufactured by machining, stamping, blanking, powder metal technology, etc. These manufacturing methods are not only expensive, but are also not suitable for manufacturing targets with fine features and complex geometries that are required for high-accuracy sensors. Asymmetries in the placement of the teeth in a target wheel or changes in gap distance as the target wheel rotates lead to inaccuracies in the position determination. Targets with precise features are particularly needed in state-of-the-art continuous linear and angular position sensors. Such continuous sensors determine position continuously over a range of values, such as angular rotation between 0° to 120°, whereas the toothed wheel sensors described above provide discrete position indications when a tooth passes adjacent the field sensing element. The continuous sensors employ a single shaped target where the shape is designed to produce continuous variations in the magnetic field over the length of the sensor. A spiral shape is one example of a continuous sensor. Although it is possible to manufacture precise continuous sensors using the prior art machining, stamping, etc. techniques described above, precision equipment is required and thus the cost for such sensors is high.

### Summary of the Invention

The present invention provides a method for manufacturing targets with features as small as 0.1 mm by 0.1 mm, and up to about 1 mm thick for use with either discrete target or continuous target sensors. The magnetic field variations caused by targets with these dimensions can be sensed across air gaps in the range of about 0.25 to 0.5 mm, a range that is typical for high-accuracy position and speed sensors employed in most automotive systems. It has been shown that magnetic field sensing devices in use today can detect these targets across these gaps, thereby providing accurate and precise position measurement.

The present invention advantageously utilizes photolithographic techniques, applied to a printed circuit board substrate material, to produce precisely located, shaped and dimensioned targets for position and speed sensors. A photoresist material layer is disposed over the copper clad layer of conventional circuit board material. The photoresist layer is patterned and etched to form one or more trenches therein. The trenches are filled with a ferromagnetic material through an electroforming process to form the target structures. The precision of the position detection is improved by the target's straight vertical sidewalls, which are a result of the photolithographic process.

### Brief Description of the Drawings

The foregoing and other features of the invention will be apparent from the following more particular description of the invention, as illustrated in the accompanying drawings, in which like reference characters refer to the same parts throughout the different figures. The drawings are not necessarily to scale, emphasis instead being placed upon illustrating the principles of the invention.
Figure 1 illustrates a sensor target constructed according to the teachings of the present invention;
Figures 2A and 2B illustrate an application of the sensor target of Figure 1;
Figure 3 illustrates the sensor output for the sensor target of Figures 2A and 2B;
Figure 4 illustrates another embodiment of a sensor target;
Figure 5 illustrates the sensor output for the sensor target of Figures 4;
Figures 6 through 11 illustrate the processing steps for manufacturing a sensor target, such as the sensor target of Figure 1, according to the teachings of a first embodiment of the present invention;
Figure 12 illustrates a plurality of sensor targets fabricated according to the processing steps of Figures 6 through 11;
Figures 13 through 17 illustrate the processing steps for manufacturing a sensor target according to a second embodiment of the present invention; and
Figures 18 through 23 illustrate the processing steps for manufacturing a sensor target according to a third embodiment of the present invention.

### Detailed Description of the Invention

Before describing in detail the particular method for forming targets for position and speed sensors and targets formed according to said methods in accordance with the teachings of the present invention, it should be observed that the present invention resides primarily in a novel and non-obvious combination of hardware elements and process steps related to forming said targets. Accordingly, the hardware elements and method steps have been represented by conventional elements in the drawings, showing only those specific details that are pertinent to the present invention, so as not to obscure the disclosure with structural details that will be readily apparent to those skilled in the art having the benefit of the description herein.

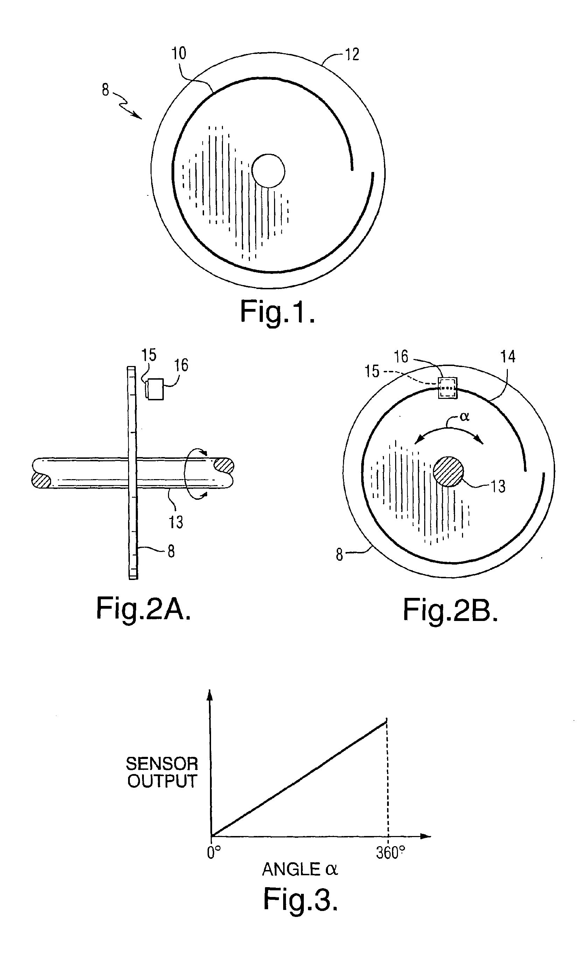

As discussed above, state-of the-art position and speed sensors require the use of precision targets capable of providing the required accuracy and resolution of the sensed position. Each target must also be formed with a sufficient quantity of ferromagnetic material to cause a change in the magnetic field that can be sensed by current magnetic sensing devices, especially given the air gap dimensions in common use in automotive and industrial applications. Figure 1 illustrates a target 8 comprising a continuous ferromagnetic target track 10 formed of a ferromagnetic material on a copper-clad substrate material 12. In one embodiment, the completed assembly is coated with a passivation layer to protect the target from degradation caused by environmental effects, e.g., rusting of the ferromagnetic target. When such a ferromagnetic track is formed according to the teachings of the present invention, the accuracy and precision obtained is better than that available using the prior art methods.

An application for the target 8 for determining the angular position of a rotating shaft 13 to which the target 8 is attached, is illustrated in Figures 2A and 2B. In particular, these Figures illustrate an angular sensor that employs a spiral target 14 to generate an output signal proportional to the angle α, as illustrated in Figure 3. A magnetic field sensor 15, such as a Hall effect device or a magnetoresistor, is mounted adjacent the target 8. A bias magnet 16 provides the magnet field that is sensed by the sensor 15 and varied by the position of the spiral target 14.

The spiral-shaped target 14 of Figure 2B provides an output that is a linear function of angle. In another embodiment, the output value can be obtained from a microprocessor controlled lookup table, where the index into the table is the angular position value. In yet another embodiment, because precision targets can be formed according to the teachings of the present invention, the look-up table and microprocessor are unnecessary as the desired output function can be provided directly by appropriate design of the shape and dimensions of the track.

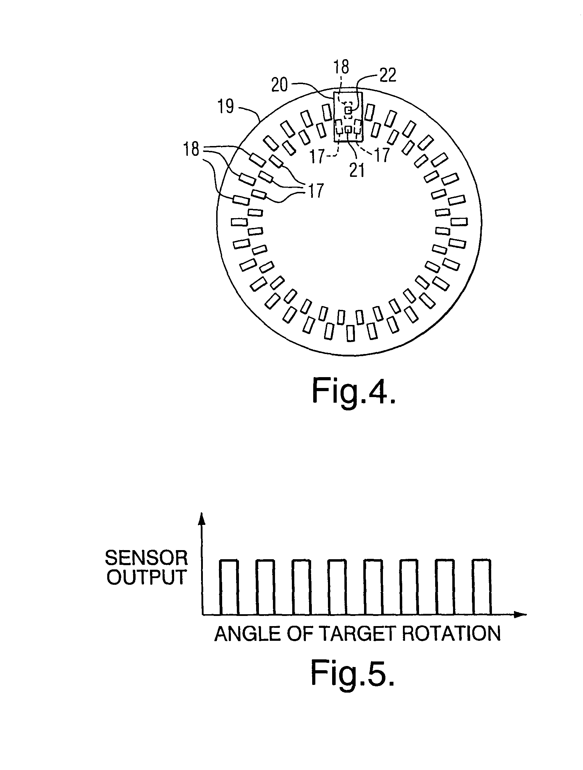

Figure 4 illustrates another embodiment of a position sensor to which the teachings of the present invention can be applied, including planar complementary targets 17 and 18 mounted on a target disk 19. A magnetic field is formed by a bias magnet 20, modulated by the targets 17 and 18, and sensed by magnetic field sensors 21 and 22, respectively. Due to the discrete configuration of the targets 17 and 18, the sensor output as a function of target rotation is a series of pulses as illustrated in Figure 5.

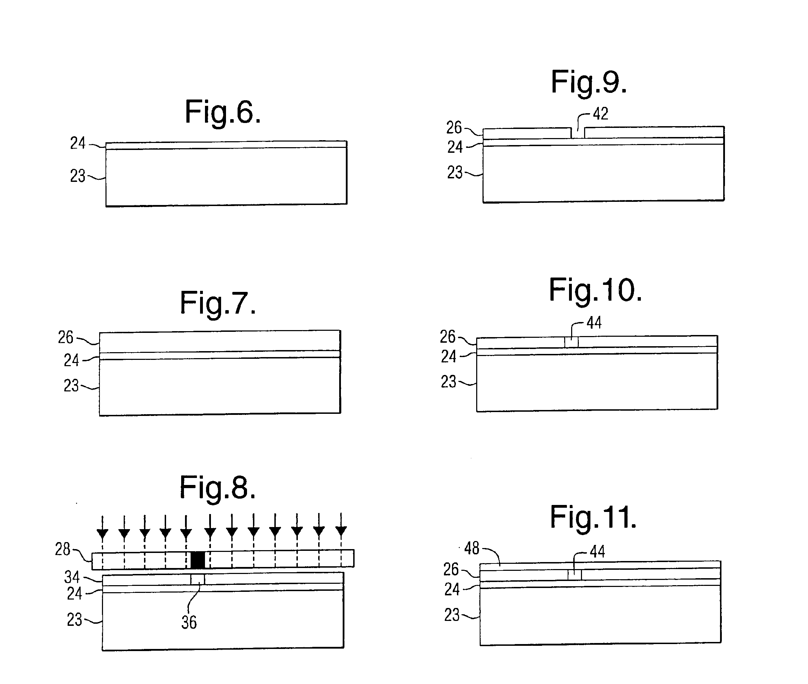

Figures 6 through 11 illustrate the process steps according to the present invention for forming ferromagnetic targets. A substrate material 23, such as FR-4 includes an overlying copper layer 24. In conventional printed circuit board processing, the copper layer 24 is patterned and etched, leaving conductive paths that form the electrical connection between electronic components to be inserted into the printed circuit board. A copper clad ceramic material can also be employed as the substrate.

According to the teachings of the present invention, a photoresist layer 26, preferably of photoresist material SU-8 available from MicroChem Corporation of Newton, Massachusetts, is applied over the copper layer 24. See Figure 7. The SU-8 has a relatively high mechanical strength in the crosslinked state, i.e., after exposure to the ultraviolet light, and can be applied in a layer sufficiently thick to allow the formation of high-aspect ratio targets (i.e., targets that are relatively thick compared to their width dimensions). Other photoresist materials displaying these properties are suitable substitutes for SU-8 in the process of the present invention.

A mask 28 is then introduced above the assembly, where the mask includes regions of varying opacity that define the desired target shape. Since the SU-8 photoresist material is a negative-acting photoresist, the hole to be formed within the photoresist layer 26 is defined by an opaque region in the mask 28. This hole will later be filled with ferromagnetic material to form the target structure. After subjecting the assembly to ultraviolet light, as indicated in Figure 8, the photoresist layer is defined by certain exposed areas 34 that were exposed to the ultraviolet light passing through mask 28, and certain unexposed areas 36 that were blocked from exposure to the ultraviolet light by opaque regions in the mask 28. The exposed regions 34 are transformed from a relatively soluble state to a non-soluble state through the polymerization process caused by exposure to the ultraviolet light. The unexposed regions remain relatively soluble. In another embodiment, where a positive-acting photoresist material is used, the target region is defined by a transparent region in the mask 28.

A chemical developing material, such as xylene, is then applied to the assembly to remove the unexposed soluble areas of the photoresist layer 26. As a result, a trench 42 is formed in the photoresist layer 26 in those areas where the photoresist was not exposed to the ultraviolet light in Figure 8. Although only one trench is shown in Figure 9, it is known that any number of trenches can be formed as dictated by the specific geometries of the target configurations, such as the targets illustrated in Figures 1, 2B and 4.

The assembly carrying the trench patterns is then immersed in a bath of an appropriate ferromagnetic metal or alloy, such as iron, nickel, alloy 42 or permalloy, which is a class of nickel-iron alloys. The nickel and permalloy materials may be preferred due to their higher corrosion resistance. However, the elemental iron has a substantially higher permeability and saturation value than nickel. Thus iron may be preferable for thin targets so that the induced change in the magnetic field is greater and therefore easier to sense. Also, elemental iron electroplates easier and faster than nickel and nickel alloys.

During the electroplating process the ferromagnetic material fills the trench 42 up from the copper layer 24, forming target 44 in the trench 42. See Figure 10. The copper layer 24 that is left intact during the process steps serves as the electrode to be plated in the exposed areas, e. g., the trench 42. Typically, the electroplating process is terminated when the top surface of the ferromagnetic material in the trench 42 reaches the top surface of the photoresist layer 26. Acceptable iron electroplating techniques include those employed for electroplating iron on soldering tips and for forming stereotype printing plates. Permalloy electroplating techniques are known and used in conjunction with the fabrication of micro-electro-mechanical systems (MEMS).

After the desired thickness has been achieved, the assembly is removed from the electroplating bath, washed, rinsed and dried. As shown in Figure 11, a protective passivation layer 48 is disposed over the target 44 and the photoresist layer 26 to provide protection from mechanical and environmental degradation, especially rusting. The passivation layer 48 is formed by, for example, depositing polyimid or a similar polymeric compound. In another embodiment, a second layer of the SU-8 material can be deposited to serve as the passivation layer 48. In yet another embodiment, chromium or nickel can be electroplated over the target region to form the passivation layer.

By forming the magnetic target structure within a photoresist trench, mechanical strength and support for the target structure is provided by the adjacent sidewalls of the cured photoresist layer 26. This is especially important for the narrowest target structures and those having a high aspect ratio, i.e., depth with respect to width.

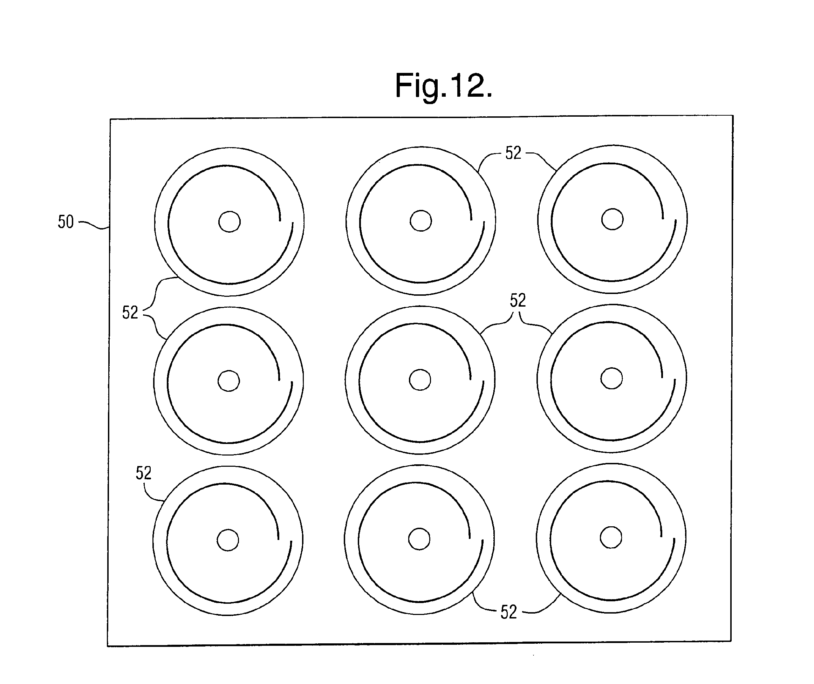

Typically, as illustrated in Figure 12, a single sheet 50 of substrate material 23 is used to simultaneously fabricate a plurality of target structures 52, which are singulated after the fabrication process has been completed. For this manufacturing process the copper layer 24 serves as a common conductor for all the targets 52 during the electroforming process. Thus, according to the teachings of the present invention, no dedicated connections are required for electroforming the targets. Also, the copper layer provides a firm anchor for narrow electroformed targets.

In another embodiment according to the teachings of the present invention, a flash layer (generally defined as less than about 2 Angstroms) of silver or chromium is disposed over the copper layer 24, to enhance the mechanical bond between the cured photoresist layer 26 and the copper layer 24. If such a flash layer is not present, the copper layer 24 must be thoroughly cleaned before application of the photoresist layer 26 to ensure a good bond therebetween.

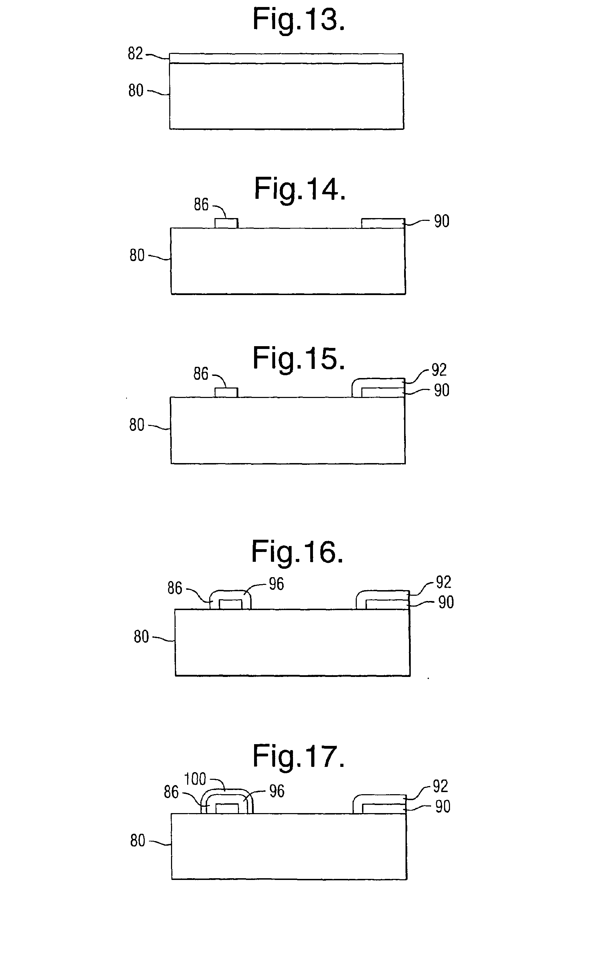

Another process for forming targets for position and speed sensing is disclosed and described with respect to Figures 13 through 17. An exemplary final product of this process is the spiral target for continuous position sensing illustrated in Figure 1, although the process is more generally applicable to any target size or shape. A plurality of such targets can be fabricated on a single substrate, as shown in Figure 12, and then singulated into individual targets.

As shown in Figure 13, a substrate 80 and a copper clad layer 82 comprise a conventional printed circuit board. Using conventional printed circuit board processes, the copper layer 82 is patterned and etched in the shape and size of the desired magnetic targets, forming etched copper target pattern 86 as shown in Figure 14. The target pattern 86 can be a segment of the spiral target 10 of Figure 1, shown in cross-section. When fabricated using this batch process, a current conductor connecting all of the targets is required for the electroforming step to be described below. Such a common current conductor 90, which is formed simultaneously with the target pattern 86, is also shown in Figure 14.

In Figure 15, a protective polymer coating layer 92 is deposited over the common current conductor 90 to prevent the plating thereof during the subsequent electroplating step. This deposition step can be executed by silk screening or stencil printing, techniques that are conventional in printed circuit board processing. If the deposition step is omitted, the common current conductor 90 will be plated in the next step and may interfere with operation of the magnetic field sensor. In another embodiment, the polymer layer 92 may not necessarily be required as the target shape and the distance between the target pattern 86 and the common conductor 90 preclude this interference. Also, most regions of the common current conductor 90 will be separated from the targets when the assembly is separated into individual targets.

As illustrated in Figure 16, the assembly is electroplated with nickel, iron, permalloy or a nickel-iron alloy to form a target 96 over the target pattern 86. The electroplating process and materials are similar to those described in conjunction with Figure 10 above, but the resulting plated region of the target 96 will not be as precisely dimensioned as the embodiment above due to the absence of bounding sidewalls in this embodiment. For example, if the target pattern 86 is 0.1 mm wide, during the electroplating process a 0.1 mm thick plated region is formed above the target pattern 86, and the plated region may also grow 0.1 mm laterally on each side of the target pattern 86. Thus the resulting target 96 is larger than the target pattern 86. For certain applications of the target 96, this may not present any difficulties as the position determined from such targets may be sufficiently accurate. Recognize that the process of this embodiment is also simpler and therefore less expensive than the photolithographic embodiment described above.

A passivation layer 100, illustrated in Figure 17 can be applied to the target 96 to prevent corrosion. Suitable passivation materials include chromium, nickel (which can be applied by electroplating) or polymeric compounds. A protective layer (not shown in Figure 17) can be applied to the entire surface of the assembly. The assembly is then cut into the individual targets.

In yet another embodiment of the present invention, targets can be fabricated according to a relatively less precise, but still sufficiently precise for many applications, and less expensive process. In this process, the copper cladding on a printed circuit board is replaced by a cladding of ferromagnetic material, such as permalloy, magnetic stainless steel , nickel, etc. Existing process techniques can produce these materials with relatively high magnetic permeabilities and extremely low coercive forces. In one embodiment a pure iron cladding can be employed.

According to the process, conventional photolithographic techniques can be applied to the ferromagnetic cladding material. Appropriate etchants for these ferromagnetic claddings are known. For example, ferric chloride (FeCl₃) conventionally used for etching copper clad printed circuit boards can also be used for etching nickel and permalloy clad boards.

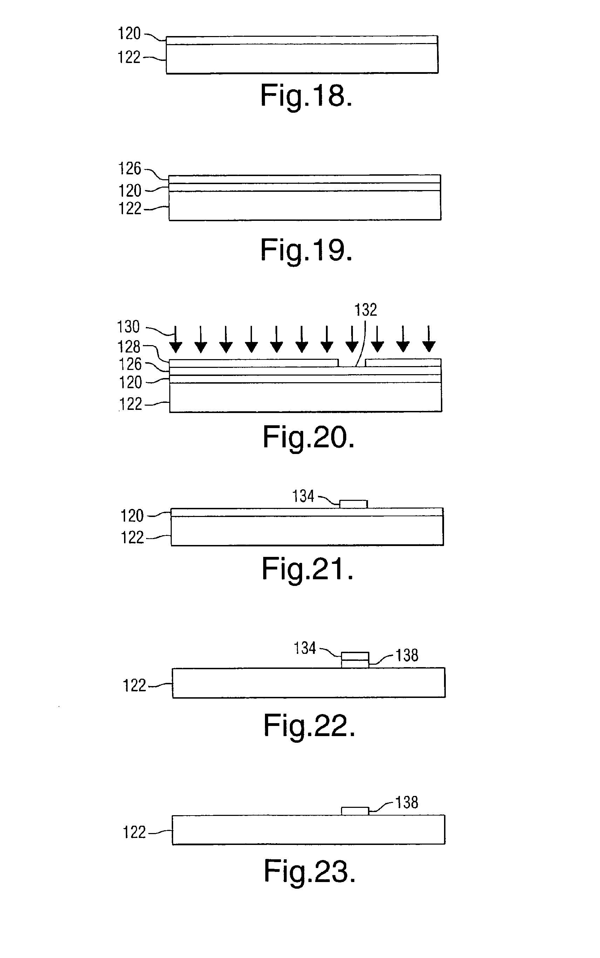

As shown in Figure 18, a ferromagnetic cladding material layer 120 is disposed over a base material or substrate 122, formed from a rigid polymer, ceramic, printed circuit board base material such as FR-4, or even a nonmagnetic metal (e.g., aluminum). The ferromagnetic layer 120 comprises a material exhibiting ferromagnetic properties, such as iron, nickel and permalloy. A conventional photoresist material layer 126 is applied over the ferromagnetic layer 120 as illustrated in Figure 19.

As shown in Figure 20, a mask 128 is then introduced above the assembly, where the mask includes regions of varying opacity that define the desired target shape. The pattern of the mask 128 is transferred to the photoresist material layer 126 according to conventional printed circuit board processing techniques, curing exposed regions of the photoresist material layer 126 and causing the exposed regions to become insoluble in the developer. Exposure to ultraviolet light, identified by reference character 130, is one known technique for transferring the mask pattern, creating an exposed region 132. A chemical developing material, such as xylene, is applied to the assembly to remove the unexposed soluble areas of the photoresist material layer 126, leaving a mesa region 134 of the photoresist material layer 126 overlying an area of the ferromagnetic layer 120. See Figure 21. The exposed regions of the ferromagnetic layer 120 are removed by exposure to an appropriate etchant. In the embodiment where the ferromagnetic layer 120 comprises nickel or permalloy, a printed circuit board etch chemistry (such as FeCl₃) can be used. After removal of the exposed regions of the ferromagnetic layer 120, a target 138 remains above the substrate 122. The overlying region 134 is then removed, leaving the remaining structure as shown in Figure 23. In the embodiment where the ferromagnetic layer 120 comprises iron, a passivation layer is preferred to protect the iron target from rust. Suitable passivation layer materials include a thin layer of coated nickel or certain polymer materials.

While the invention has been described with reference to preferred embodiments, it will be understood by those skilled in the art that various changes may be made and equivalent elements may be substituted for elements thereof without departing from the scope of the present invention. The scope of the present invention further includes any combination of the elements from the various embodiments set forth herein. In addition, modifications may be made to adapt a particular situation to the teachings of the present invention without departing from its essential scope thereof. For example, differently sized and shaped targets than those illustrated can be formed according to the teachings of the present invention. Therefore, it is intended that the invention not be limited to the particular embodiment disclosed as the best mode contemplated for carrying out this invention, but that the invention will include all embodiments falling within the scope of the appended claims.

## Claims

1. A method for forming a ferromagnetic target 8 for a sensor 15, comprising:
forming a conductive layer 24 on a substrate 23;
disposing a photoresist layer 26 over the conductive layer 24;
patterning the photoresist layer 26 to form at least one trench 42 therein; and
forming ferromagnetic material in the trench such that the ferromagnetic-filled trench forms the target 8.

2. The method of claim 1 wherein the conductive layer 24 comprises copper.

3. The method of claim 1 wherein the photoresist layer 26 comprises a negative-acting photoresist.

4. The method of claim 3 wherein the negative acting photoresist comprises SU-8.

5. The method of claim 1 wherein the step of patterning further comprises:
positioning a photolithographic mask 28 over the photoresist layer 26, wherein the mask 28 includes one or more relatively transparent and one or more relatively opaque regions;
exposing the mask 28 to radiation, causing the regions of the photoresist layer 26 subjected to the radiation to undergo a structural change; and
etching regions of the mask 28, wherein the etched regions comprise the regions 34/36 that underwent a structural change or the regions that did not undergo a structural change 34/36 to form the at least one trench 42 therein.

6. The method of claim 1 wherein the step of forming the ferromagnetic material in the trench 42 comprises immersing the substrate 23 in an electroplating bath of ferromagnetic material and electroplating the ferromagnetic material in the trenches 42 to form the target.

7. The method of claim 6 wherein the conductive layer 24 forms a conductor for the electroplating step.

8. The method of claim 1 wherein a plurality of targets 52 are formed simultaneously on a common substrate 23.

9. The method of claim 8 wherein the conductor layer 24 serves as a common conductor 90 during the electroplating step, such that ferromagnetic material is formed in each one of the plurality of trenches 42.

10. The method of claim 1 wherein the ferromagnetic material is selected from among nickel, iron, alloy 42 and permalloy.

11. The method of claim 1 wherein after the target 42 is formed, further comprising disposing a passivation layer 48 over the target 8.

12. The method of claim 1 wherein the substrate 23 is attached to a moving object 19, and wherein the sensor 15 determines one or more of the position, velocity, speed and acceleration of the object 19.

13. A method for forming a ferromagnetic target 8 for a position sensor 15, comprising:
patterning a conductive layer 82 disposed over a substrate 80 by removing certain regions of the conductive layer 82, wherein the remaining regions form patterned conductive regions;
disposing ferromagnetic material 96 on the patterned conductive regions to form the target 8.

14. The method of claim 13 wherein the conductive layer 82 comprises copper.

15. The method of claim 13 wherein the step of patterning further comprises:
applying a photoresist layer 26 over the conductive layer 82;
positioning a mask 28 over the photoresist layer 26, wherein the mask 28 includes one or more relatively transparent regions and one or more relatively opaque regions;
exposing the mask 28 to electromagnetic radiation, causing the regions of the photoresist layer subjected to the radiation to undergo a structural change; and
removing regions of the photoresist layer 26 to expose regions of the underlying conductive layer 82, wherein the removed regions comprise the regions 34/36 that underwent a structural change or the regions 34/36 that did not undergo a structural change, such that the remaining regions of the photoresist layer 26 overlie the regions of the conductive layer 82 defining the target 8; and
removing the exposed regions of the conductive layer 82, such that the remaining regions of the conductive layer 82 define patterned conductive regions.

16. The method of claim 15 wherein the step of disposing the ferromagnetic material further comprises electroplating ferromagnetic material on the patterned conductive regions to form the target 8.

17. The method of claim 13 wherein a plurality of targets 52 are formed simultaneously on a common substrate 80.

18. The method of claim 17 further comprising forming a common conductor 90 connecting each of the patterned conductive regions, wherein the common conductor 90 serves as the common conductor during the electroplating step, such that ferromagnetic material is formed on each one of the patterned conductive regions of the plurality of targets 52.

19. The method of claim 18 further comprising forming a barrier layer 92 over the common conductor, such that during the step of disposing the ferromagnetic material the barrier layer 92 prevents disposing of the ferromagnetic material on the common conductor.

20. A method for forming a ferromagnetic target 8 for a sensor 15, comprising:
forming a ferromagnetic layer 96 on a substrate 80; and
patterning the ferromagnetic layer to form at least one target 8 therein.

21. A method for forming a ferromagnetic target 8 for a sensor, comprising:
forming a ferromagnetic layer 120 on a substrate 122;
disposing a photoresist layer over the ferromagnetic layer;
patterning the photoresist layer 126 to form at least one mesa region 134 therein;
removing the ferromagnetic layer 120 except in those regions underlying the mesa region 134; and
wherein the ferromagnetic material 120 underlying the mesa region 134 forms the target 8.

22. The method of claim 21 wherein the ferromagnetic material 120 is selected from among nickel, iron, alloy 42 and permalloy.

23. A ferromagnetic target 44 for a position sensor, comprising:
a substrate 23;
a conductive layer 24 overlying said substrate 23;
a photoresist layer 26 overlying said conductive layer 24, wherein said photoresist layer 26 includes one or more trenches 42 having the shape of the target 8; and
ferromagnetic material in the trench 42 such that the ferromagnetic-filled trench forms the target 44.

24. The target of claim 20 wherein the conductive layer 24 comprises copper.

25. A ferromagnetic target 44 for a position sensor, comprising:
a substrate 122; and
a patterned ferromagnetic layer 120 overlying said substrate 122, wherein said patterned ferromagnetic layer 120 forms said target.
